# FASCICULE DE BREVET EUROPEEN

(11) **EP 1 117 307 B1**
(45) Date de publication et mention de la délivrance du brevet: **14.05.2003**
(21) Numéro de dépôt: 99969653.7
(22) Date de dépôt: 29.09.1999
(51) Int. Cl.: A23N 12/02

(54) **DISPOSITIF DE LAVAGE EN CONTINU DE PRODUITS, NOTAMMENT DE VEGETAUX**
EINRICHTUNG ZUM KONTINUIERLICHEN WASCHEN VON PRODUKTEN INSBESONDERE GEMÜSE
DEVICE FOR CONTINUOUSLY WASHING PRODUCTS, IN PARTICULAR VEGETABLE PRODUCTS

(30) Priorité: 30.09.1998 FR 9812412
(43) Date de publication de la demande: 25.07.2001
(73) Titulaire: FREEZE AGRO INGENIERIE, F-29800 Pencran (FR)
(72) Inventeur: LE LEZ, Jean, F-29800 Pencran (FR)
(74) Mandataire: Le Faou, Daniel
(86) Numéro de dépôt international: FR9902312
(87) Numéro de publication internationale: WO00018260

(56) Documents cités:
- EP-A- 0 715 815
- WO-A-95/35040
- US-A- 3 447 544

## Description

La présente invention concerne un dispositif de lavage en continu de produits, notamment de végétaux.

Elle concerne plus précisément un dispositif du type comprenant une première cuve, dite de lavage, à la sortie de laquelle est disposé un tambour tamiseur rotatif, à paroi ajourée, qui est adapté pour extraire les produits lavés de cette première cuve et est équipé de moyens d'enlèvement des insectes et autres particules qui adhèrent à sa paroi, ce tambour surplombant une seconde cuve, dite de recyclage, apte à recueillir par gravité une partie au moins de l'eau qui a été extraite de la première cuve en même temps que les produits lavés et qui a traversé la paroi du tambour principal, un circuit de recyclage étant prévu pour assurer le retour de cette eau, de la cuve de recyclage dans la cuve de lavage.

L'état de la technique en la matière peut être illustré par la demande internationale WO 95/35040, au nom de la demanderesse, à laquelle on pourra se référer au besoin.

Dans le mode de réalisation illustré à la figure 6 de ce document, les moyens d'enlèvement des insectes et autres particules qui adhèrent à la paroi du tambour tamiseur, référencé 12, consistent en une rampe de soufflage d'air comprimé 160 associée à une raclette 261.

On notera par ailleurs que, dans ce mode de réalisation, il est prévu dans la cuve de lavage un tourniquet rotatif, associé à un peigne, dont le rôle est de ramasser les déchets qui flottent dans l'eau de la cuve de lavage.

Dans la description et dans les revendications de la présente demande de brevet, on entendra conventionnellement par la désignation "eau", aussi bien de l'eau proprement dite que toute solution aqueuse contenant des substances de lavage, désinfectante et/ou bactéricide.

Le dispositif de lavage mentionné ci-dessus, qui est commercialisé par la demanderesse sous la dénomination "POLYWASH" (marque déposée) est globalement satisfaisante sur les plans de l'efficacité et du rendement.

Il convient cependant d'observer que, par suite du développement des cultures dites biologiques, sans pesticide, et en raison de l'évolution de la réglementation relative aux procédés de lavage des végétaux, qui tend à limiter, voire à interdire l'utilisation de certaines substances, en particulier chlorées, il se pose de plus en plus un problème d'élimination de particules indésirables, et notamment d'insectes, qui se trouvent présents dans la masse de végétaux à traiter.

C'est pourquoi, un objectif de la présente invention est de perfectionner le dispositif connu faisant l'objet de la demande de brevet internationale précitée, et notamment du mode de réalisation de la figure 6, de manière à obtenir des végétaux propres contenant un taux de particules indésirables, et en particulier d'insectes, qui soit nul ou pratiquement nul.

Dans la présente description, et dans les revendications qui suivent, on désignera par "tambour principal" le tambour tamiseur rotatif qui se trouve à la sortie de la cuve de lavage.

L'objectif rappelé plus haut, est atteint conformément à l'invention, grâce au fait que, d'une part, la cuve de recyclage est subdivisée en deux compartiments communicants, à savoir un premier compartiment placé sous le tambour principal, et un second compartiment auquel se raccorde le circuit de recyclage, et que, d'autre part, il comporte des moyens pour éliminer par débordement, et en continu, les insectes et autres particules flottant sur l'eau du premier compartiment, avant le transfert de cette eau dans le second compartiment.

Grâce à cet agencement, on obtient un captage des insectes et autres particules flottantes indésirables, qui évite leur réinjection dans le cycle de lavage, ce qui réduit considérablement les risques de pollution du produit final.

Par ailleurs, selon un certain nombre de caractéristiques additionnelles, non limitatives de l'invention :
- lesdits moyens d'élimination par débordement comprennent un volet mobile ( en direction verticale) permettant d'ajuster le niveau du débordement ;
- le dispositif comporte un moyen de filtration de l'eau qui passe du premier dans le second compartiment ;
- l'eau passe du premier dans le second compartiment par débordement, en traversant ledit moyen de filtration ;
- ledit moyen de filtration est un tambour tamiseur rotatif, dit tambour auxiliaire, qui surplombe le second compartiment ;
- ce tambour auxiliaire est pourvu intérieurement d'une rampe de soufflage d'air apte à décoller et évacuer les insectes et autres particules adhérant à sa paroi ;
- le fond du premier compartiment est équipé d'une vanne de vidange permettant l'élimination des insectes et particules plongeants.

Dans l'hypothèse où ce dispositif est destiné au lavage de produits flottants, et où la cuve de lavage est équipée de moyens pour générer des bulles d'air afin de favoriser le brassage des produits au cours du lavage, le dispositif comporte avantageusement des moyens pour immerger progressivement les produits dans l'eau de cette cuve au cours de leur transfert vers la sortie, ces moyens comprenant une paroi ajourée apte à faire plonger les produits tout en autorisant le libre passage du bas vers le haut, sous l'effet de la poussée d'Archimède, d'insectes et autres particules flottants de "petit calibre", c'est-à-dire de dimensions inférieures à celles des mailles de la paroi ajourée.

Dans un mode de réalisation possible, ces moyens consistent en un tambour tamiseur rotatif, dont la partie inférieure baigne dans l'eau de la cuve de lavage.

Dans un autre mode de réalisation possible, ces moyens consistent en une grille articulée, au moins partiellement immergée dans la cuve de lavage, et animée d'un mouvement alternatif oscillant, du haut vers le bas (et inversement), autour d'un axe horizontal transversal.

Selon une caractéristique additionnelle de l'invention, le dispositif comporte des moyens pour évacuer latéralement, hors de la cuve de lavage, l'eau contenant les insectes et particules flottants ayant traversé la paroi ajourée.

De préférence, le dispositif comporte des moyens pour filtrer cette eau et pour la transférer ensuite dans la cuve de recyclage.

D'autres caractéristiques et avantages de l'invention apparaîtront de la description et des dessins annexés qui en représentent, à titre d'exemple non limitatif, un mode de réa lisation préféré.

Sur les dessins :
- la figure 1 est une vue de face schématique du dispositif, dans son ensemble ;
- la figure 2 est une vue de détail montrant la partie droite du dispositif de la figure 1 ;
- la figure 3 est une vue de détail du dispositif, représentant les moyens d'immersion des produits dans la cuve de lavage ;
- la figure 4 est une vue similaire à la figure 3, qui représente une variante de ces moyens d'immersion.

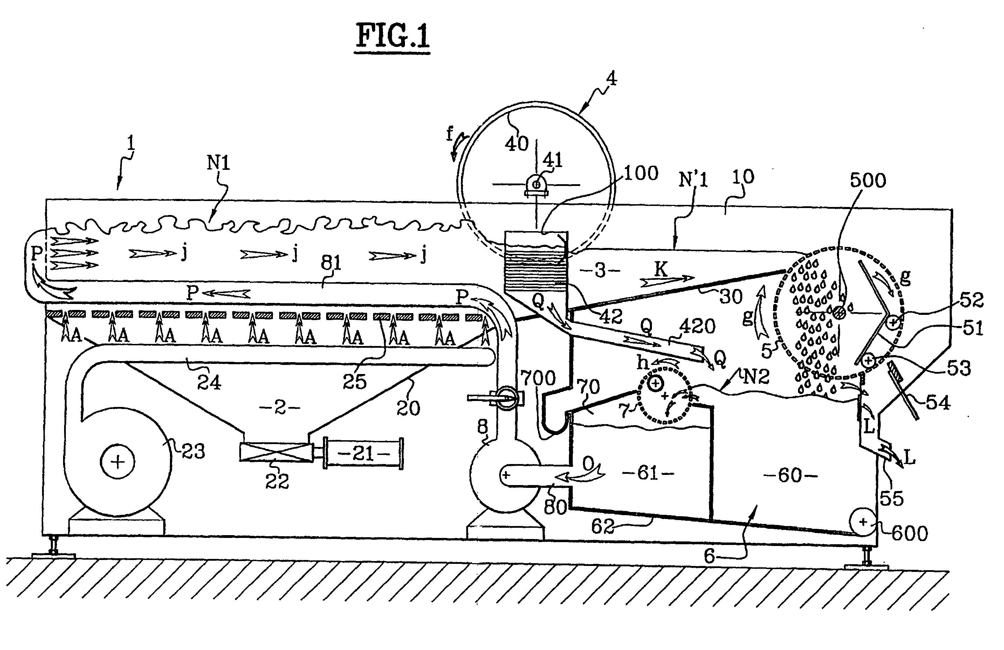

Le dispositif représenté sur la figure 1 est du même type général que celui décrit dans la demande antérieure WO 95/35040.

Le dispositif comporte essentiellement un bâti 1 comprenant deux cloisons verticales et longitudinales 10 (parallèles au plan du dessin), qui forment les parois latérales des cuves.

La cuve de lavage, référencée 2, présente un fond 20 ayant la forme générale d'une trémie (tronc de pyramide) dont le sommet, dirigé vers le bas, est équipé d'une trappe -ou vanne- de vidange 22 à ouverture commandée par un vérin 21.

La fonction de cette vanne est de permettre l'élimination périodique des particules lourdes qui se sont déposées par décantation au fond de la cuve de lavage.

A l'intérieur de la cuve est disposée une grille horizontale 25, servant à retenir les produits traités, au-dessous de laquelle s'étend une rampe 24 servant à distribuer de l'air pulsé, généré par une turbine 23, dans l'eau de la cuve 2.

Comme expliqué dans la demande internationale précitée, ces jets d'air assurent un brassage des produits au cours de leur transfert dans la cuve de lavage, brassage qui favorise le lavage.

Le transfert des produits, symbolisé par par les flèches **J** sur la figure 1, se fait de la gauche vers la droite, sous l'effet d'un courant d'eau en circulation, comme cela sera expliqué plus loin.

Au-dessus de la grille 25, la zone de lavage, de niveau **N**_{**i**}, est turbulente; à sa sortie est disposé un tambour rotatif 4.

Il s'agit d'un tambour à paroi ajourée 40, pouvant tourner autour d'un axe transversal horizontal 41, et entraîné en rotation par un moteur approprié ( non représenté), selon un mouvement de vitesse continue et constante.

Son sens de rotation est symbolisé par la flèche **f** sur les figures.

Sa partie inférieure baigne dans l'eau de lavage.

Les ouvertures de sa paroi perforée ont une section nettement plus faible que celle des produits concernés.

Comme on le verra plus loin, le rôle de ce tambour 4 est de forcer les produits traités à plonger dans l'eau du lavage au cours de leur transfert, tout en favorisant leur acheminement, et en éliminant les déchets flottants de calibre réduit.

Les produits sont ainsi acheminés vers la portion aval de la cuve de lavage, référencée 3, laquelle constitue une zone non turbulente, de niveau **N'**_{**1**}.

Le fond de cette zone, référencé 30, faiblement incliné débouche à proximité du tambour tamiseur et extracteur 5, situé en sortie de la cuve.

Le transfert des produits vers ce tambour 5 - dit principal - est symbolisé par la flèche **K** sur les figures.

Comme cela est expliqué dans la demande internationale déjà citée, le tambour tamiseur tourne autour d'un axe horizontal transversal 500 à vitesse continue et uniforme, dans un sens symbolisé par la flèche **g**, et assure tangentiellement l'extraction des produits lavés au fur et à mesure qu'ils débordent de la cuve sous l'effet du courant d'eau de lavage.

Les produits se trouvent transportés sur une portion de circonférence (environ un demi-tour) du tambour, après quoi ils s'en séparent naturellement sous l'effet de la gravité, vers le bas et l'extérieur du dispositif, pour tomber dans un réceptacle ou sur un convoyeur approprié (non représenté).

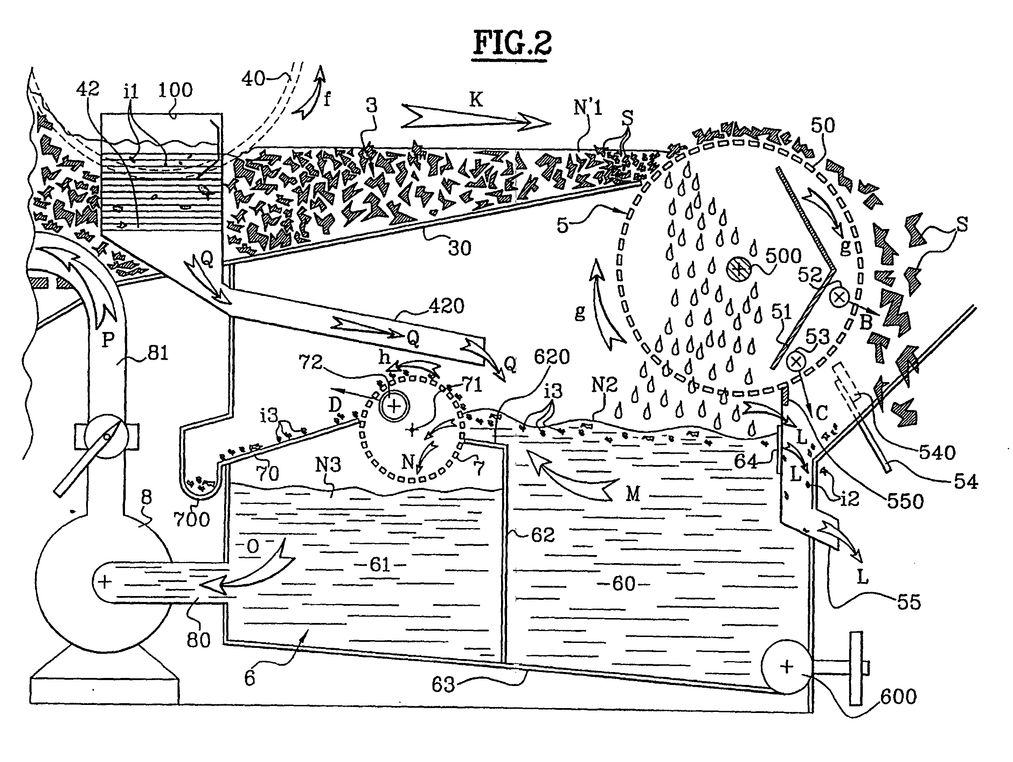

Avantageusement, cette séparation est favorisée par la présence à l'intérieur du tambour d'une rampe de soufflage d'air comprimé 52, dont les jets d'air **B** (Fig.2), qui traversent la paroi 50 du tambour, tendent à rejeter les produits-désignés **S** - vers l'extérieur.

En aval de la rampe 52 est prévue une raclette 54, dont la lame 540 est de préférence ajustable ; son rôle est de détacher les produits **S** qui auraient tendance à adhérer au tambour.

Toutefois, la lame de raclette 540 ne frotte pas directement contre la paroi du tambour ; elle en est écartée d'une certaine distance, par exemple de l'ordre de 5 à 10 mm, de manière à intercepter les produits tout en laissant passer les particules plus fines, et notamment les insectes, susceptibles d'être collés contre le tambour.

L'élimination de ces insectes ou autres particules se fait au moyen d'une autre raclette 550, située plus en aval, qui, elle, s'applique contre la paroi du tambour ; cette éjection est assistée par une seconde rampe d'air comprimé, ou soufflette, 53, qui produit des jets d'air **C** qui traversent la paroi du tambour, de l'intérieur vers l'extérieur.

Ces particules indésirables sont désignées **i**_{**2**} sur la figure 2.

L'eau qui a accompagné les produits lavés hors de la cuve de lavage s'écoule par gravité dans l'espace intérieur (vide) du tambour, puis traverse la paroi ajourée 50 de sa portion inférieure, en aval de la raclette 550, donc à travers une zone de paroi qui, en principe, a été débarassée des impuretés. Le tambour principal 5 a donc une fonction d'essorage du produit.

Une plaque déflectrice 51 de profil approprié permet de canaliser cette chute d'eau, de manière à ce qu'elle retombe bien dans la cuve de recyclage 6 sous-jacente.

Selon une caractéristique essentielle de l'invention, cette cuve 6 est compartimentée.

Une cloison transversale verticale 62 la sépare en deux parties, une première partie 60 disposée en-dessous du tambour 5, et une seconde partie 61 située du côté de la cuve de lavage, en-dessous du fond 30 de la zone 3.

La cuve 6 a un fond incliné 63, dont le point le plus bas, situé dans le compartiment 60, est équipé d'une vanne de vidange 600.

La cloison 62 présente, en partie supérieure, un rebord 620, tourné vers le compartiment 61, et adjacent à un autre tambour rotatif 7. Il s'agit d'un tambour à paroi ajourée, d'axe horizontal transversal 71, similaire au tambour principal 5, mais de diamètre nettement plus faible. Son sens de rotation est symbolisé par la flèche **h** sur les figures 1 et 2.

Selon une caractéristique importante, le maillage des parois des tambours 4, 5 et 7 est décroissant.

A titre indicatif, s'agissant de lavage de feuilles de salade, par exemple de laitue ou de mâche, les dimensions des mailles du tambour 4 sont de l'ordre de 15 mm, celles du tambour 5 de l'ordre de 4 mm, et celles du tambour 7 de l'ordre de 2 mm.

L'axe 71 du tambour 7 se trouve légèrement en-dessous du niveau N₂ de l'eau contenue dans le compartiment 60. Ce tambour surplombe le compartiment 61.

A l'extrémité opposée (sur la droite des figures), la face arrière du compartiment 60 est équipée, à son bord supérieur, d'un volet 64 ajustable en hauteur. Son rôle est de permettre le libre écoulement par débordement de la couche supérieure de l'eau contenue dans le compartiment 60.

Cette couche peut ainsi s'échapper librement à l'extérieur du compartiment 60, avec un débit plus ou moins important, qui est fonction de l'ajustement du volet 64, l'écoulement se faisant dans une goulotte 55, laquelle sert également à l'évacuation des particules **i**_{**2**} dont il a été fait état plus haut.

Du côté de la cuve de lavage, le tambour auxiliaire jouxte une rampe 70, légèrement inclinée, qui débouche dans une goulotte 700 servant également à l'évacuation des particules, comme cela sera expliqué plus loin.

Dans sa zone inférieure, le compartiment 61 se raccorde à un conduit 80 branché sur une pompe à eau 8 qui alimente, via un conduit 81, la cuve de lavage 2.

Plus précisément cette alimentation correspond à une injection d'eau à l'extrémité amont de la cuve (sur la gauche des figures), sous forme de jets **J**, comme cela est expliqué en détail dans la demande de brevet internationale susmentionnée.

De plus, il est prévu un système d'appoint d'eau (non représenté) destiné à compenser les pertes d'eau qui se font par débordement en cours d'opération.

En regard de l'espace intérieur du tambour 4, au niveau **N'**_{**1**}, l'une au moins des cloisons latérales 10 présente une découpe (fenêtre) délimitant une ouverture 100. Sa fonction est de laisser échapper latéralement l'eau et les particules qu'elle véhicule, qui se trouvent à l'intérieur du tambour. Cette évacuation se fait à travers un filtre 42, l'eau exemptée de déchets s'écoulant alors dans un chéneau légèrement incliné 420 pour retomber dans le compartiment 60, comme symbolisé par les flèches **Q**.

En référence aux figures 1 à 3, nous allons maintenant expliquer de quelle manière fonctionne le dispositif, celui-ci étant mis en oeuvre pour le lavage de végétaux flottants **S**, par exemple des feuilles de laitue, susceptibles de contenir des particules indésirables, notamment des insectes.

A cet égard, on notera que certaines particules peuvent être flottantes, et d'autres plongeantes.

La turbine à air 23 et la pompe à eau 8 étant mises en route, et les feuilles de salade étant distribuées en continu à l'extrémité amont de la cuve 2 (du côté gauche sur les figures), on observe un transfert progressif de ces produits selon les flèches **J** dans la cuve 2 ; ce transfert est accompagné d'un brassage énergique dû à la mise en oeuvre de la pluralité de jets d'air **A**, ce qui a pour effet de laver très efficacement les feuilles de salade.

Au cours de ce traitement, une partie des insectes plongeants, des particules lourdes (graviers, par exemple) et débris divers qui étaient présents au sein de la masse de feuilles traversent les ouvertures de la grille 25 pour retomber par décantation au fond de la cuve 2. Elles seront éliminées ultérieurement par ouverture de la vanne de vidange 22.

Les insectes flottants, ainsi que les particules légères, sont acheminés en même temps que les feuilles de salade selon la direction **J**.

Arrivée au niveau du tambour 4, la masse de produit est entraînée par la paroi 40 en mouvement, et est forcée de plonger progressivement dans l'eau, en dessous du niveau **N**_{**1**}**.** La vitesse périphérique du tambour 4, tout comme celle du tambour principal 5, est adaptée bien sûr à la vitesse du courant d'eau de lavage.

A ce stade, une partie des insectes flottants, ainsi que de particules légères -désignés **i**_{**1**}**-** est susceptible de remonter à travers la paroi ajourée 40 ; en effet, leurs dimensions sont nettement plus faibles que celles du produit.

Ces déchets sont retenus par le filtre 42, tandis que l'eau qui a servi à leur transfert s'écoule par le cheneau 420 dans le compartiment 60.

Les produits **S**, débarrassés d'une partie de leurs impuretés poursuivent leur acheminement (flèche **K**) dans la zone calme 3, jusqu'à la sortie de la cuve où ils sont pris en charge par le tambour principal 5.

Comme cela a déjà été expliqué, les produits **S** sont alors recueillis, tandis que sont éliminés, par la raclette 550 et la soufflette 53, d'autres particules indésirables qui sont restées collées à la paroi 50.

Cependant, à ce stade, certains insectes ou autres particules de faibles dimensions arrivent à traverser le tambour principal en même temps que les gouttes d'eau qui accompagnaient le produit, et tombent dans le compartiment 60.

Ces déchets se répartissent en deux catégories: des déchets lourds, qui plongent au fond du compartiment 60, et des déchets flottants.

Les déchets lourds peuvent être évacués périodiquement, grâce à la trappe 600.

Les déchets flottants, référencés **i**_{**3**}, sont éliminés en partie par débordement vers la droite de la figure 2, par passage au dessus du volet 64, et en partie vers la gauche de la figure, par passage au-dessus du tambour tamiseur rotatif 7.

Ce tambour tamiseur a en fait le même rôle pour les déchets flottants que celui du tambour principal pour les produits lavés.

Les déchets flottans **i**_{**3**} sont transportés sur une partie de la circonférence du tambour 7 pour être évacués sur la rampe 70, leur éjection étant favorisée par la mise en oeuvre de jets d'air **D** au moyen d'une rampe d'air comprimé 72 s'étendant à l'intérieur du tambour.

Ces déchets se retrouvent dans la goulotte 700 d'où ils peuvent être évacués.

Sur la figure 2 on a désigné par les flèches **L** l'eau et les particules qui débordent vers l'extérieur au-dessus du volet 64 et par la flèche **M** l'eau qui sort du compartiment 60, pour passer au-dessus du rebord 620 de la cloison 62 en direction du tambour tamiseur 7. Comme déjà dit, ce dernier a des mailles relativement fines et fait office de filtre.

L'eau qui le traverse (flèches **N**) pour retomber dans le compartiment 61 est donc pure.

On notera que la hauteur du niveau d'eau **N**_{**3**} dans le compartiment 61 est sensiblement plus faible que celle du niveau **N**_{**2**} dans le compartiment 60.

L'eau pure est aspirée (flèche **O**) dans le compartiment 61 par la pompe 8 et est ramenée (flèche **P**) via le conduit 81 dans la cuve de lavage 2, ce qui assure la fermeture de la "boucle" du recyclage. Grâce à l'agencement qui vient d'être décrit, on évite que des particules indésirables ne se retrouvent dans l'eau de lavage.

Du fait que dans la cuve 6 les insectes sont éliminés en continu par débordement, le problème d'encrassement qui se poserait avec un filtre classique est notablement réduit, et la maintenance du dispositif est simplifiée.

Il suffit périodiquement de nettoyer le filtre 42 et de vidanger la cuve 2 et le compartiment 60 au moyen des trappes 22 et 600 respectivement.

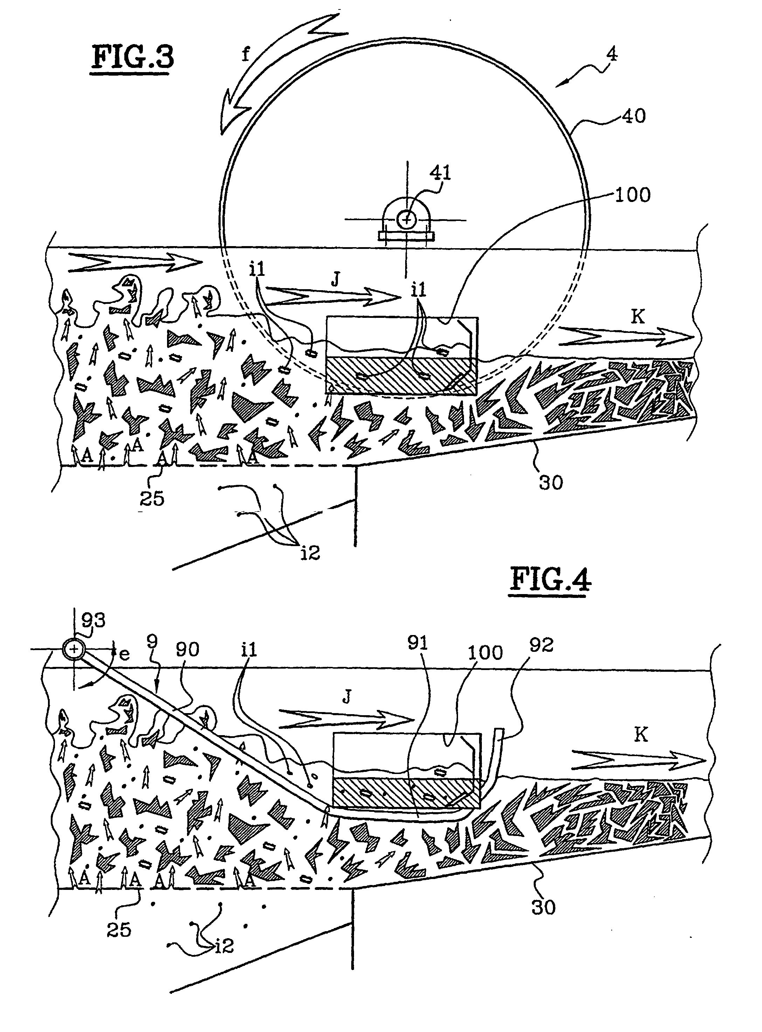

Dans la variante illustrée à la figure 4, le tambour 4 a été remplacé par une grille 9.

Celle-ci est articulée autour d'un axe transversal 93, et peut pivoter alternativement vers le haut et vers le bas, ce mouvement d'oscillation étant symbolisé par la double flèche **e**.

A titre indicatif, ce mouvement oscillant a une amplitude angulaire de l'ordre de 10_.

La grille 9 possède une partie rectiligne 90, légèrement inclinée vers le bas et vers l'aval, dont le rôle est de forcer le produit à plonger progressivement au cours de son transfert selon **J**.

La grille présente, en regard de la fenêtre 100, une portion sensiblement horizontale 91, et une portion d'extrémité libre recourbée vers le haut, référencée 92.

Les battements répétitifs de la grille favorisent la séparation des particules indésirables de la masse de produits immergés ; ces particules **i**_{**1**} peuvent ainsi traverser les mailles de la grille pour se retrouver au-dessus de cette dernière, afin d'être ensuite évacuées par l'ouverture latérale 100.

On signalera, pour la bonne règle, qu'il est déjà connu de faire avancer des végétaux de faible densité dans une cuve de lavage au moyen d'un tapis semi-rigide ajouré, à mouvement cyclique, qui réalise un trempage répété des produits, avec pour conséquence l'élimination d'une partie des corps flottants de petit calibre susceptibles de traverser les ouvertures du tapis (voir FR-A-2 581 533).

Les parois des différents tambours tamiseurs 4, 5, 7 et celles de la grille 9 peuvent indifféremment consister en des plaques perforées ou en des grilles à fils parallèles ou croisées.

Les dimensions de leurs mailles seront bien entendu adaptées à la nature et au calibre des produits traités, ainsi qu'à la taille des insectes ou autres particules susceptibles d'être présents dans et/ou sur lesdits produits.

## Revendications

1. Dispositif de lavage en continu de produits, notamment de végétaux (S), qui comprend une première cuve (2), dite de lavage, à la sortie de laquelle est disposé un tambour tamiseur rotatif (5), à paroi (50) ajourée, dit tambour principal, qui est adapté pour extraire les produits lavés de cette première cuve (2), et est équipé de moyens (550, 53) d'enlèvement des insectes et autres particules qui adhèrent à sa paroi (50), ce tambour (5) surplombant une seconde cuve (6), dite de recyclage, apte à recueillir par gravité une partie au moins de l'eau qui a été extraite de ladite première cuve (2) en même temps que les produits lavés et qui a traversé la paroi (50) du tambour principal (5), dans lequel un circuit de recyclage (80,8,81) assure le retour de cette eau de la cuve de recyclage (6) dans la cuve de lavage (2), **caractérisé par le fait que**, d'une part, ladite cuve de recyclage (6) est subdivisée en deux compartiments communicants, à savoir un premier compartiment (60) placé sous le tambour principal (5), et un second compartiment (61) auquel se raccorde ledit circuit de recyclage, et que, d'autre part, il comporte des moyens pour éliminer par débordement, et en continu, les insectes et autres particules flottant sur l'eau du premier compartiment (60), avant le transfert (N) de cette eau dans le second compartiment (61).

2. Dispositif de lavage selon la revendication 1, **caractérisé par le fait que** lesdits moyens d'élimination par débordement comprennent un volet mobile (64) permettant d'ajuster le niveau du débordement.

3. Dispositif de lavage selon la revendication 1 ou 2, **caractérisé par le fait qu'**il comporte un moyen de filtration de l'eau qui passe du premier dans le second compartiment.

4. Dispositif de lavage selon la revendication 3, **caractérisé par le fait que** l'eau passe du premier dans le second compartiment par débordement, en traversant ledit moyen de filtration.

5. Dispositif de lavage selon la revendication 4, **caractérisé par le fait que** ledit moyen de filtration est un tambour tamiseur rotatif (7), dit tambour auxiliaire, qui surplombe le second compartiment (61).

6. Dispositif de lavage selon la revendication 5, **caractérisé par le fait que** le tambour auxiliaire (7) est pourvu intérieurement d'une rampe de soufflage d'air (72) apte à décoller et évacuer les insectes et autres particules adhérant à sa paroi.

7. Dispositif de lavage selon l'une des revendications 1 à 6, **caractérisé par le fait que** le fond du premier compartiment est équipé d'une vanne de vidange (600) permettant l'élimination des insectes et particules plongeants.

8. Dispositif de lavage selon l'une des revendications 1 à 7, destiné au lavage de produits flottants dans lequel la cuve de lavage (2) est équipée de moyens (23, 24) pour générer des bulles d'air afin de favoriser le brassage des produits au cours du lavage, **caractérisé par le fait qu'**il comporte des moyens (4; 9) pour immerger progressivement les produits dans l'eau de cette cuve (2) au cours de leur transfert vers la sortie, ces moyens comprenant une paroi ajourée (40, 90) apte à faire plonger les produits tout en autorisant le passage d'insectes et autres particules flottants de petit calibre.

9. Dispositif de lavage selon la revendication 8, **caractérisé par le fait que** lesdits moyens consistent en un tambour tamiseur rotatif (4), dont la partie inférieure baigne dans l'eau de la cuve de lavage (2).

10. Dispositif de lavage selon la revendication 8, **caractérisé par le fait que** lesdits moyens consistent en une grille articulée (9), animée d'un mouvement oscillant autour d'un axe horizontal transversal (93).

11. Dispositif de lavage selon l'une des revendications 8 à 10, **caractérisé par le fait qu'**il comporte des moyens pour évacuer latéralement, hors de la cuve de lavage (2), l'eau contenant les insectes et particules flottants ayant traversé la paroi ajourée (40; 90)

12. Dispositif de lavage selon la revendication 11, **caractérisé par le fait qu'**il comporte des moyens (42, 420) pour filtrer cette eau et pour la transférer dans la cuve de recyclage (6).

## Patentansprüche

1. Vorrichtung für das kontinuierliche Waschen von Produkten, und insbesondere von pflanzlichen Produkten (S), welche einen ersten Bottich (2) enthält, der als Waschbottich bezeichnet wird, an dessen Auslaß eine drehbare Siebtrommel (5) mit einer perforierten Wand (50) angeordnet ist, die als Haupttrommel bezeichnet wird, und die so konzipiert ist, dass sie die gewaschenen Produkte aus dem ersten Bottich (2) abscheiden kann, und die mit Mitteln (550, 53) für die Entfernung von Insekten und anderen Partikeln, die an der Wand (50) haften, ausgestattet ist, wobei diese Siebtrommel (5) über einem zweiten Bottich (6), einem sogenannten Recyclingbottich, angeordnet ist, um durch Schwerkraft mindestens einen Teil des Wassers aufzufangen, das aus dem ersten Bottich (2) gleichzeitig mit den gewaschenen Produkten abgeschieden worden ist und welche die Wand (50) der Haupttrommel (5) durchquert haben, und in der ein Recyclingkreislauf (80, 8, 81) für den Rücklauf des Wassers aus dem Recyclingbottich (6) in den Waschbottich (2) sorgt,
**dadurch gekennzeichnet, dass**
einerseits der Recyclingbottich (6) in zwei kommunizierende Abteile unterteilt ist, das heißt in ein erstes Abteil (60), das unter der Haupttrommel (5) angeordnet ist, und in ein zweites Abteil (61), an das der Recyclingkreis angeschlossen ist, und dass andererseits Mittel vorgesehen sind, um durch Überlauf und kontinuierlich Insekten und andere Partikel auszuschwemmen, die auf dem Wasser in dem ersten Abteil (60) vor dem Transfer (N) dieses Wasser in das zweite Abteil (61) schwimmen.

2. Waschvorrichtung nach Anspruch 1,
**dadurch gekennzeichnet, dass**
die Mittel für das Entfernen durch Überlauf eine bewegliche Klappe (64) enthalten, welche es erlauben, den Pegel des Überlaufs zu regulieren.

3. Waschvorrichtung nach einem der Ansprüche 1 oder 2,
**dadurch gekennzeichnet, dass**
sie ein Mittel für die Filterung des Wassers enthält, das von dem ersten Abteil in das zweite Abteil fließt.

4. Waschvorrichtung nach Anspruch 3,
**dadurch gekennzeichnet, dass**
das Wasser aus dem ersten Abteil in das zweite Abteil durch Überlauf fließt, während es den Filter durchquert.

5. Waschvorrichtung nach Anspruch 4,
**dadurch gekennzeichnet, dass**
dieser Filter aus einer drehbaren Siebtrommel (7), einer sogenannten Hilfstrommel besteht, die über dem zweiten Abteil (61) angeordnet ist.

6. Waschvorrichtung nach Anspruch 5,
**dadurch gekennzeichnet, dass**
die Hilfstrommel (7) an ihrer Innenseite mit einer Rampe (72) für das Einblasen von Luft ausgestattet ist, mit deren Hilfe die Insekten und anderen Partikel, die an ihrer Wand haften, abgetrennt und entfernt werden können.

7. Waschvorrichtung nach einem der Ansprüche 1 bis 6,
**dadurch gekennzeichnet, dass**
der Boden des ersten Abteils mit einem Auslassventil (600) ausgestattet ist, welches die Entfernung von darin schwimmenden Insekten und Partikeln erlaubt.

8. Waschvorrichtung nach einem der Ansprüche 1 bis 7, die für das Auswaschen von schwimmenden Produkten bestimmt ist, in welcher der Waschbottich (2) mit Mitteln (23, 24) ausgestattet ist, mit deren Hilfe Luftblasen erzeugt werden können, um dadurch das Umrühren der Produkte während dem Waschvorgang zu begünstigen,
**dadurch gekennzeichnet, dass**
sie Mittel (4; 9) enthält, um die Produkte nacheinander in das Wasser in diesen Bottich (2) während ihrer Weiterleitung an den Auslaß einzutauchen, wobei diese Mittel eine perforierte Wand (40, 90) enthalten, mit deren Hilfe die Produkte eingetaucht werden können, während gleichzeitig die Passage von schwimmenden Insekten und anderen kleinen Partikeln ermöglicht wird.

9. Waschvorrichtung nach Anspruch 8,
**dadurch gekennzeichnet, dass**
diese Mittel aus einer Drehtrommel (4) bestehen, deren unterer Teil in das Wasser des Waschbottichs (2) eintaucht.

10. Waschvorrichtung nach Anspruch 8,
**dadurch gekennzeichnet, dass**
diese Mittel aus einem angelenkten Gitter (9) bestehen, das schwenkbar um eine horizontale Querachse (93) bewegt werden kann.

11. Waschvorrichtung nach einem der Ansprüche 8 bis 10,
**dadurch gekennzeichnet, dass**
sie Mittel enthält, um in seitlicher Richtung aus dem Waschbottich (2) das Wasser abzulassen, welches die schwimmenden Insekten und Partikeln enthält, welche die perforierte Wand (40; 90) durchquert haben.

12. Waschvorrichtung nach Anspruch 11,
**dadurch gekennzeichnet, dass**
sie Mittel (42, 420) enthält, um dieses Wasser zu filtern und es in den Recyclingbehälter (6) zu leiten.

## Claims

1. A device for continuously washing articles, in particular plant produce (S), the device comprising a "washing" first vessel (2) having a "main" rotary screen drum (5) with a perforated wall (50) placed at the outlet thereof, which drum is adapted to extract washed articles from said first vessel (2) and is fitted with means (550, 53) for removing insects and other particles which adhere to its wall (50), said drum (5) being disposed over a "recycling" second vessel (6) suitable for collecting under gravity at least a fraction of the water that has been extracted from said first vessel (2) together with the washed articles and that have passed through the wall (6) of the main drum (5), and in which a recycling circuit (80, 8, 81) causes said water to return from the recycling vessel (6) to the washing vessel (2), the device being **characterized by** the fact that firstly said recycling vessel (6) is subdivided into two compartments in communication with each other, namely a first compartment (60) placed beneath the main drum (5) and a second compartment (61) to which said recycling circuit is connected, and by the fact that, secondly, it includes means for continuously removing by overflow the insects and other particles floating on the water of the first compartment (60) prior to said water being transferred (N) into the second compartment (61).

2. A washing device according to claim 1, **characterized by** the fact that said means for removing by overflow include a moving flap (64) enabling the overflow level to be adjusted.

3. A washing device according to claim 1 or claim 2, **characterized by** the fact that it includes means for filtering the water passing from the first compartment to the second compartment.

4. A washing device according to claim 3, **characterized by** the fact that the water passes from the first compartment to the second compartment by overflow, passing through said filter means.

5. A washing device according to claim 4, **characterized by** the fact that said filter means is an "auxiliary" rotary screen drum (7) disposed over the second compartment (61).

6. A washing device according to claim 5, **characterized by** the fact that the auxiliary drum (7) is provided internally with an air-blowing strip (72) suitable for detaching and removing insects and other particles adhering to its wall.

7. A washing device according to any one of claims 1 to 6, **characterized by** the fact that the bottom of the first compartment is fitted with an emptying valve (600) enabling sunken insects and particles to be removed.

8. A washing device according to any one of claims 1 to 7, for washing floating articles, in which the washing vessel (2) is fitted with means (23, 24) for generating bubbles of air to agitate the articles while they are being washed, the device being **characterized by** the fact that it includes means (4; 9) for progressively immersing the articles in the water of said vessel (2) while they are being transferred towards the outlet, said means comprising a perforated wall (40, 90) suitable for pushing under the articles while allowing insects and other floating particles of small size to pass through.

9. A washing device according to claim 8, **characterized by** the fact that said means comprise a rotary screening drum (4) whose bottom portion is immersed in the water of the washing vessel (2).

10. A washing device according to claim 8, **characterized by** the fact that said means consist in a hinged grid (9) driven with reciprocating motion about a transverse horizontal axis (93).

11. A washing device according to any one of claims 8 to 10, **characterized by** the fact that it includes means for removing water laterally from the washing vessel (2), said water containing the floating insects and particles that have passed through the perforated wall (40; 90).

12. A washing device according to claim 11, **characterized by** the fact that it includes means (42, 420) for filtering said water and for transferring it into the recycling vessel (6).
